Europäisches Patentamt

European Patent Office

Office européen des brevets

(19)

(11) Veröffentlichungsnummer: **0 259 714 B1**

# EUROPÄISCHE PATENTSCHRIFT

(12)

(45) Veröffentlichungstag der Patentschrift: **29.05.91**

(21) Anmeldenummer: **87112504.3**

(22) Anmeldetag: **27.08.87**

(51) Int. Cl.⁵: **H02K 7/08**, F16C 27/08, F16C 27/06

(54) **Anlaufscheibe.**

(30) Priorität: **08.09.86 DE 3630558**

(43) Veröffentlichungstag der Anmeldung:
**16.03.88 Patentblatt 88/11**

(45) Bekanntmachung des Hinweises auf die
Patenterteilung:
**29.05.91 Patentblatt 91/22**

(84) Benannte Vertragsstaaten:
**DE ES FR GB IT**

(56) Entgegenhaltungen:
**FR-A- 1 195 665**
**US-A- 2 716 579**

(73) Patentinhaber: **Siemens Aktiengesellschaft**
**Wittelsbacherplatz 2**
**W-8000 München 2(DE)**

(72) Erfinder: **Harbauer, Werner, Dipl.-Ing.**
**Flurstrasse 10**
**W-8702 Kürnach(DE)**
Erfinder: **Renkl, Klaus, Dipl.-Ing.**
**An der oberen Mühle 10**
**W-8702 Kürnach(DE)**

EP 0 259 714 B1

## Beschreibung

Die Erfindung bezieht sich auf eine Anlaufscheibe gemäß dem Oberbegriff des Anspruchs 1. Eine derartige Anlaufscheibe ist durch die FR-A-1 195 665 bekannt.

Bei der durch die FR-A-1 195 665 bekannten Vorrichtung wird ein elastischer Dämpfungsring axial zwischen zwei Scheiben gehalten, die untereinander durch zahnartig ineinandergreifende, axial an deren Umfang angeformte Mitnahmearme in Drehmitnahme stehen. Zur Drehmitnahme zwischen der Rotorwelle und den Scheiben mit dem Dämpfungsring dient eine mit der Rotorwelle fest verbundene Ölrückführscheibe, die mit axial angeformten Mitnahmefingern tangential gegen radial überstehende Mitnahmenocken an den Scheiben zur Anlage kommt.

Bei einer durch das DE-U-19 97 150 bekannten Dämpfungs-Anordnung ist ein aus mehreren Scheiben unterschiedliche Frequenzen dämpfender Stoffe zusammengesetztes Dämm- bzw. Dämpfungsglied zwischen eine Wellenschulter und einem feststehenden Gehäuse-bzw. Lagerteil eines Elektromotors eingebracht. Nach einer besonderen Ausgestaltung ist die Anordnung außenseitig durch Anlaufflächen begrenzt, die z.B. als Stahlscheiben ausgebildet und mit dem Dämmglied durch Klebung, Vulkanisation oder dergleichen verbunden sind.

Durch die DE-C-3D 01 481 ist eine weitere Anlaufscheibe zur Begrenzung der axialen Beweglichkeit des Läufers eines Kleinmotors bekannt. Die Anlaufscheibe besteht aus einem Hohlzylinder aus Gummi, in dessen Stirnfläche ein Ring aus gehärtetem Stahl mit einer sich in radialer Richtung erstreckenden Anlauffläche eingebettet ist; beide Teile sind zusammenvulkanisiert, wobei die Festigkeit der Verbindung zwischen beiden Teilen durch Anwendung einer Haftmittelbeschichtung im Bereich der gegenseitigen Kontaktfläche verbessert werden soll. Die Verankerung zwischen der Welle des Kleinmotors und der Anlaufscheibe ergibt sich aus der elastischen Ausweitung des Hohlzylinders während der Montage.

Aufgabe der vorliegenden Erfindung ist es, unter Beibehaltung einer hohen Betriebssicherheit eine hinsichtlich Fertigung und Montage wesentlich vereinfachte Anordnung zur Geräuschdämpfung von Störschwingungen axialer Richtung an rotierenden Wellen zu schaffen.

Die Lösung dieser Aufgabe ist bei einer Anlaufscheibe der eingangs genannten Art erfindungsgemäß durch die kennzeichnenden Merkmale des Anspruchs 1 möglich; vorteilhafte Ausgestaltungen der Erfindung sind jeweils Gegenstand der Unteransprüche.

Bei der erfindungsgemäßen Anlaufscheibe kann auf die aufwendigen und zeitraubenden Fertigungs- und Montagemaßnahme von gegenseitig auszurichtenden und durch Zusatzteile in Mitnahmeverbindung mit der Rotorwelle zu bringende Scheiben und der dazwischen zu halternden Dämpfungsscheibe bzw. auf eine unter Haftmittelbeschichtung erfolgenden Klebung bzw. Vulkanisation der Bauteile verzichtet werden, wobei durch die radiale Ausweichmöglichkeit des eingequetschten Dämpfungsglieds in die Zwischenräume der am Umfang verteilten Haltearme aufgrund des hohen Anpreß-Haltedrucks zwischen Anlaufring und Dämpfungsglied sowie der teilweise formschlüssigen Wulstumfassung zwischen den tangentialen Rändern der Haltearme und des gequetschten Dämpfungsglieds eine hohe Verbindungsfestigkeit zwischen den beiden einfach herstellbaren und gegenseitig zu verbindenden Teilen der Anlaufscheibe und deren Rotationsmitnahme über das im Quetschsitz auf der Rotorwelle gehaltene Dämpfungsglied gewährleistet ist.

Durch das Verhältnis der tangentialen Breite der Haltearme zu der tangentialen Breite der Zwischenräume kann der Grad der radialen Ausweichmöglichkeit des eingequetschten Dämpfungsgliedes geändert und damit auf einfache Weise die Dämpfungskonstante des Dämpfungsgliedes gegenüber axialen Stößen variiert werden. Eine besonders einfache und trotzdem sichere sowie den geforderten Dämpfungseigenschaften im allgemeinen genügende Verteilung der Haltearme ist dadurch gekennzeichnet, daß die Haltearme am Umfang des Anlaufrings um 120° gegeneinander versetzt angeordnet sind.

In Abhängigkeit von den Einsatzbedingungen kann ein Anlaufring aus Metall oder aus Kunststoff gewählt werden. Für Anwendungen, bei denen eine besonders hohe Abriebsfestigkeit des Anlaufrings gefordert wird, ist ein Anlaufring aus Stahl vorgesehen; für Anwendungen, die eine besonders gute Geräuschdämpfung erfordern, werden Anlaufringe aus abriebsfesten Kunststoff eingesetzt, die darüber hinaus auch den Vorteil des geringeren Verschleisses am Sinter-Lager des Kleinmotors bieten.

Im Sinne einer mit nur wenigen Manipulatorbewegungen vorteilhaften Automatenmontage ist nach einer weiteren Ausgestaltung vorgesehen, die Anlaufscheibe als einstückig handhabbares, vorgefertigtes Montageteil mit bereits in den Anlaufring eingedrücktem Dämpfungsglied auszubilden.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1　in einem axialen Längsschnitt eine Rotorlagerung eines Elektrokleinmotors mit einer ersten Ausführungsform einer erfindungsgemäßen Anlaufscheibe gemäß Schnittverlauf I-I in Fig.2,

Fig. 2　eine stirnseitige Draufsicht auf die Anlaufscheibe gemäß Fig.1,

Fig. 3　in einem axialen Längsschnitt eine Rotorlagerung eines Elektrokleinmotors mit einer zweiten Ausführungsform einer erfindungsgemäßen Anlaufscheibe gemäß Schnittverlauf III-III in Fig.4,

Fig. 4　eine stirnseitige Draufsicht auf die Anlaufscheibe gemäß Fig.3.

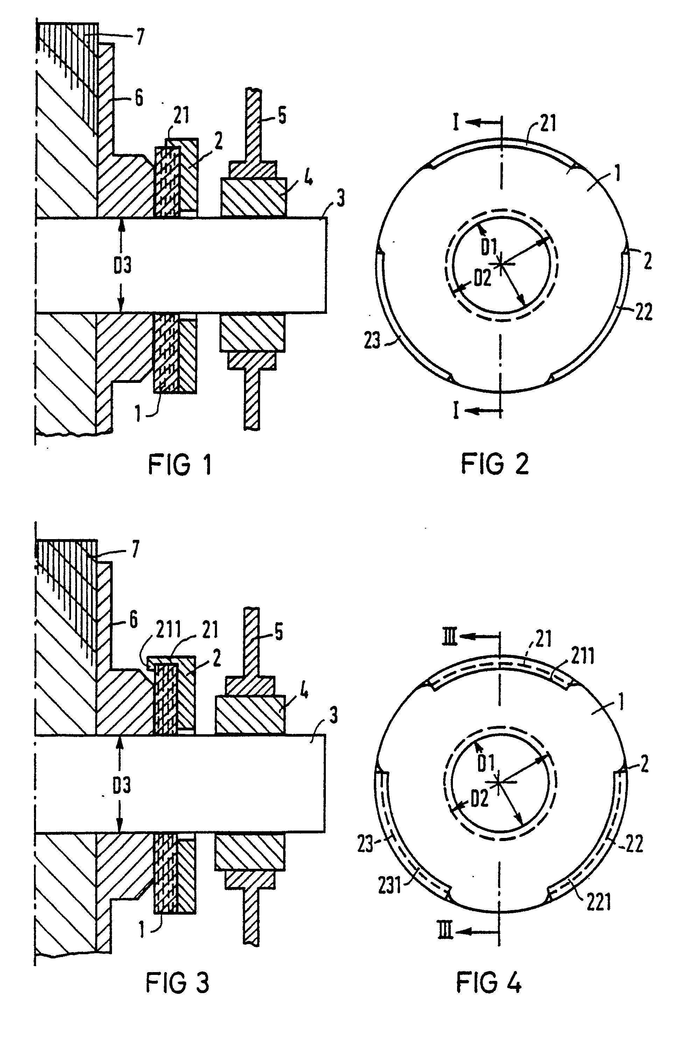

Die Figuren 1 und 3 zeigen in einem Teilausschnitt das rechte Lagerende eines Elektrokleinmotors. Die das Rotorpaket 7 mit axial vorgelagerter Rotorschulter 6 aufnehmende Rotorwelle 3 ist in einem Lager 4 drehbar gelagert, das seinerseits in einem Lagerschild 5 befestigt ist. In den axialen Zwischenraum zwischen der freien Stirnseite der Rotorschulter 6 und der gegenüberliegenden Stirnseite des Lagers 4 ist mit einem gewährleisteten Axialspiel eine Anlaufscheibe mit einem Anlaufring 2 und einem von Haltearmen 21-23 gehaltenen elastischen Dämpfungsglied 1 auf die Rotorwelle 3 aufgesteckt.

Die Anlaufscheibe gemäß Fig.1,2 besteht aus einem Anlaufring 2, an dessen Umfang in gegenseitigem tangentialen Abstand, um 120° gegeneinander versetzt, Haltearme 21,22,23 angeformt sind, und aus einem scheibenförmigen Dämpfungsglied 1 aus einem, elastomeren Werkstoff, das in den radialen Zwischenraum der übergreifenden Haltearme 21,22,23 axial eingedrückt angeordnet ist. Durch das nur teilweise Umfassen des elastischen Dämpfungsgliedes durch die Haltearme des Anlaufrings ist einerseits eine Verformung des Dämpfungsgliedes möglich und damit eine gute Dämpfungswirkung bei axialem Stoß gewährleistet sowie andererseits eine Relativbewegung zwischen elastischem Dämpfungsglied und Anlaufring mit Sicherheit verhindert.

Gemäß Fig.3 und Fig.4 sind die axial vorstehenden Haltearme 21,22,23 an ihren axial freien Enden in vorteilhafter Weise mit nach radial innen vorstehenden Nasen 211,221,231 versehen; durch die Nasen 211,221,231 wird einerseits das einfache Eindrücken des Dämpfungsgliedes 1 zwischen die Haltearme 21,22,23 nicht wesentlich behindert, andererseits wird jedoch sichergestellt, daß bei besonders starken axialen Druckbelastungen, die u.U. zu einer radialen Verformung des elastischen Dämpfungsgliedes 1 und gegebenenfalls zu einer geringfügigen Aufspreizung der Haltearme 21,22,23 führen können, die Verbindungsfestigkeit zwischen Dämpfungsglied 1 und Anlaufring 2 erhalten bleibt und somit die Geräuschdämpfung unter allen Betriebsbedingungen zuverlässig erfolgt; gleichzeitig wird auch bei rauhem Betrieb gewährleistet, daß bei vormontierter erfindungsgemäßer Anlaufscheibe die beiden zuvor zusammengesteckten Teile nicht wieder getrennt werden.

Um einen festen verkantungsfreien, gegen die Rotorschulter 6 abgestützten Sitz der Anlaufscheibe auf der Rotorwelle 3 zu erhalten, sind in vorteilhafter Weise der Innendurchmesser D1 der Wellenöffnung des Dämpfungsgliedes 1 kleiner als der Außendurchmesser D3 der Rotorwelle 3 und gegebenenfalls der Innendurchmesser D2 der Wellenöffnung des Anlaufrings 2 größer als der Außendurchmesser D3 der Rotorwelle 3 ausgebildet.

## Ansprüche

1. Anlaufscheibe zur Geräuschdämpfung von Störschwingungen axialer Richtung an rotierenden Wellen, insbesondere Rotorwellen (3) von elektrischen Kleinmotoren, mit einem scheibenförmigen elastischen Dämpfungsglied (1) und einem axial vorgelagerten Anlaufring (2), an dessen Umfang in gegenseitigem tangentialen Abstand axial Haltearme (21;22;23) angeformt sind und dessen Innendurchmesser (D2) seiner Wellenöffnung größer ist als der Außendurchmesser (D3) der Rotorwelle (3), **dadurch gekennzeichnet**, daß das elastische Dampfungsglied (1) im Festsitz auf der Rotorwelle (3) gehalten und im Sinne eines Quetschsitzes in den radialen Zwischenraum der außen übergreifenden Haltearme (21;22;23) axial eingedrückt ist.

2. Anlaufscheibe nach Anspruch 1, **dadurch gekennzeichnet**, daß die axial vorstehenden Haltearme (21,22;23) an ihren axial freien Enden mit nach radial innen vorstehenden Nasen (211;221;231) versehen sind.

3. Anlaufscheibe nach Anspruch 1 und/oder 2, **dadurch gekennzeichnet**, daß am Umfang des Anlaufrings (2) verteilt drei axial vorstehende Haltearme (21;22;23) angeordnet sind.

4. Anlaufscheibe nach Anspruch 3, **dadurch gekennzeichnet**, daß die Haltearme (21;22;23) am Umfang des Anlaufrings (2) um 120° gegeneinander versetzt angeordnet sind.

5. Anlaufscheibe nach einem der Ansprüche 1 bis 4, **dadurch gekennzeichnet**, daß der Innendurchmesser (D1) der Wellenöffnung des ummontierten elastischen Dämpfungsgliedes (1) kleiner ist als der Außendurchmesser (D3) der Rotorwelle (3).

6. Anlaufscheibe nach einem der Ansprüche 1 bis 5, **dadurch gekennzeichnet**, daß ein Anlaufring aus Metall vorgesehen ist.

7. Anlaufscheibe nach einem der Ansprüche 1 bis 5, **dadurch gekennzeichnet**, daß ein Anlaufring aus Kunststoff vorgesehen ist.

8. Anlaufscheibe nach einem der Ansprüche 1 bis 7, **dadurch gekennzeichnet**, daß die Anlaufscheibe als einstückig handhabbares, vorgefertigtes Montageteil mit bereits in den Anlaufring (2) eingedrücktem elastischen Dämpfungsglied (1) ausgebildet ist.


## Claims

1. A bearing plate for the noise-damping of spurious oscillations in the axial direction on rotating shafts, in particular rotor shafts (3) of low power electric motors, with a plate-shaped elastic damping element (1) and an axially pre-mounted bearing ring (2) on the periphery of which at mutual tangential spacing there are preformed axial holding arms (21; 22; 23), and of which the inner diameter (D2) of its shaft opening is greater than the outer diameter (D3) of the rotor shaft (3), characterised in that the elastic damping element (1) is held in interference fit on the rotor shaft (3) and in the sense of a compression seating is pressed in axially in the radial intermediate space of the outer-overreaching holding arms (21; 22;23).

2. A bearing plate according to claim 1, characterised in that the axially projecting holding arms (21, 22,23) are provided on their axial free ends with radially inwardly projecting lugs (211; 221; 231).

3. A bearing plate according to claim 1 and/or 2, characterised in that distributed over the periphery of the bearing ring (2) there are three axially projecting holding arms (21; 22; 23).

4. A bearing plate according to claim 3, characterised in that the holding arms (21, 22,23) are arranged on the periphery of the bearing ring (2) offset by 120° relative to one another.

5. A bearing plate according to one of claims 1 to 4, characterised in that the inner diameter (D1) of the shaft opening of the disassembled elastic damping element (1) is smaller than the outer diameter (D3) of the rotor shaft.

6. A bearing plate according to one of claims 1 to 5, characterised in that a bearing ring of metal is provided.

7. A bearing plate according to one of claims 1 to 5, characterised in that a bearing ring of plastics is provided.

8. A bearing plate according to one of claims 1 to 7, characterised in that the bearing plate is constructed as a one-piece manipulable, premanufactured assembly part with an elastic damping element (1) already pressed into the bearing ring (2).


## Revendications

1. Bague de butée destinée à atténuer le bruit des oscillations parasites en direction axiale sur des arbres tournants, notamment sur des arbres de rotor (3) de petits moteurs électriques, comprenant un élément élastique d'amortissement (1) et une rondelle de butée (2), qui est montée axialement en avant, de la périphérie de laquelle sont issus des bras axiaux de maintien (21 ; 22 ; 23) à distance mutuelle dans la direction tangentielle et dont le diamètre intérieur (D2) de l'alésage d'arbre est supérieur au diamètre extérieur (D3) de l'arbre du rotor (3), caractérisée en ce que l'élément élastique d'amortissement (1) est retenu avec ajustement serré sur l'arbre de rotor (3) et est enfoncé axialement, au sens d'un ajustement pincé, dans l'intervalle radial compris entre les bras de maintien (21 ; 22 ; 23) saillant extérieurement.

2. Bague de butée suivant la revendication 1, caractérisée en ce que les bras de maintien (21 ; 22 ; 23) saillant axialement sont munis, à leur extrémité axiale libre, de becs (211 ; 221 ; 231) en saillie radialement vers l'intérieur.

3. Bague de butée suivant la revendication 1 et/ou 2, caractérisée en ce que trois bras de maintien (21 ; 22 ; 23) saillant axialement sont répartis à la périphérie de la rondelle de butée (2).

4. Bague de butée suivant la revendication 3, caractérisée en ce que les bras de maintien (21 ; 22 ; 23) sont décalés les uns par rapport aux autres de 120° à la périphérie de la rondelle de butée (2).

5. Bague de butée suivant l'une des revendications 1 à 4, caractérisée en ce que le diamètre intérieur (D1) de l'alésage pour l'arbre de l'élément élastique d'amortissement (1) non monté est inférieur au diamètre extérieur (D3) de l'arbre du rotor (3).

6. Bague de butée suivant l'une des revendications 1 à 5, caractérisée en ce qu'il est prévu une rondelle de butée en métal.

7. Bague de butée suivant l'une des revendications 1 à 5, caractérisée en ce qu'il est prévu une rondelle de butée en matière plastique.

8. Bague de butée suivant l'une des revendications 1 à 7, caractérisée en ce que la bague de butée est constituée sous la forme d'une pièce de montage unitaire préfabriquée et manipulable comportant déjà un élément élastique d'amortissement (1) enfoncé dans la rondelle de butée (2).

FIG 1

FIG 2

FIG 3

FIG 4